Europäisches Patentamt

European Patent Office

Office européen des brevets

(11) Numéro de publication: **0 201 393**
**A1**

(12) **DEMANDE DE BREVET EUROPEEN**

(21) Numéro de dépôt: **86400840.4**

(22) Date de dépôt: **18.04.86**

(51) Int. Cl.4: **B21D 53/36** , B21D 35/00 ,
F16L 33/08

(30) Priorité: **07.05.85 FR 8506959**

(43) Date de publication de la demande:
**17.12.86 Bulletin 86/46**

(84) Etats contractants désignés:
**AT BE CH DE GB IT LI LU NL SE**

(71) Demandeur: **Etablissements CAILLAU S.A.R.L.
28, rue Ernest Renan
F-92130 Issy-les-Moulineaux(FR)**

(72) Inventeur: **Calmettes, Lionel
Allée près du Bourg Cidex 1648 - No. 6
F-41200 Romorantin(FR)**

(74) Mandataire: **Descourtieux, Philippe et al
CABINET BEAU de LOMENIE 55 rue
d'Amsterdam
F-75008 Paris(FR)**

(54) **Cosse de collier à vis et procédé pour sa fabrication.**

㊀ Cosse pour collier à vis constituée par une enveloppe sensiblement cylindrique (3a) et un fond - (3b) formant une seule pièce avec elle, une fente - (3d) étant prévue à la base dudit fond pour permettre le passage du brin supérieur (1a) d'une bande de serrage présentant des reliefs ou analogues coopérant avec les filets de la vis (2). Le fond (3b) de la cosse présente un tablier de renfort (3e) sensiblement perpendiculaire au plan dudit fond, ce tablier étant situé au-dessus de la fente (3d) de passage de la bande.

Cosse de collier à vis et procédé pour sa fabrication.

On sait que les colliers à vis comportent une bande de métal enroulée sur elle-même et munie sur au moins une partie de son brin extérieur de profilages, reliefs ou analogues, destinés à venir en prise avec les filets d'une vis de serrage montée pivotante dans une cosse fixée à l'une des extrémités de la bande. Les applications de ce genre de collier sont très nombreuses et concernent en particulier le serrage d'un tube souple sur un embout rigide.

Selon les applications et notamment l'effort de serrage à exercer sur le tube souple, l'épaisseur et la qualité du métal de la bande peuvent varier; bien plus, dans certains cas, on estimera nécessaire de prévoir une cosse rapportée sur la bande alors que dans d'autres cas on cherchera à réaliser une cosse formant une seule pièce avec la bande ou tout au moins avec une partie de celle-ci. Ce dernier cas est évoqué en particulier dans les brevets français FR-A-2 490 294 et 2 559 856

De toute façon, qu'elle soit ou non rapportée sur la bande, la cosse est essentiellement constituée par une enveloppe sensiblement cylindrique apte à recevoir une vis. Ladite enveloppe comporte, d'une part, un fond présentant, de préférence, un trou dans lequel le tourillon de la vis est engagé avant d'être serti, d'autre part, une fente, ménagée dans ledit fond, au travers de laquelle le brin extérieur de la bande est guidé et peut être déplacé par la rotation de la vis dont les filets coopèrent avec les reliefs dudit brin extérieur.

Dans un grand nombre de cas et notamment dans ceux décrits par les brevets français précités, la cosse est fabriquée par emboutissage d'un flan de métal, de sorte que le fond de la cosse ne constitue qu'une seule pièce avec l'enveloppe sensiblement cylindrique. L'épaisseur du flan de métal découpé et embouti pour constituer la cosse est déterminée par la nécessité de conserver après emboutissage une résistance mécanique suffisante du fond de la cosse. C'est sur ce fond en effet que la vis prend appui pour transmettre les éfforts exercés par ses filets sur les profilages de la bande au cours du serrage.

Or les opérations d'emboutissage permettant la formation de la cosse diminuent dans certaines zones de celle-ci, et notamment dans le fond, l'épaisseur du métal par rapport à l'épaisseur initiale du flan. Il en résulte que pour la majeure partie du collier, et notamment pour l'enveloppe de la cosse et éventuellement la portion de bande qui lui est attachée, l'épaisseurfinale, voisine de l'épaisseur initiale, est en fait surabondante. On supporte ainsi une augmentation inutile du poids de métal nécessaire à la fabrication d'un collier et par suite une augmentation du prix de ce collier.

La présente invention a donc pour objet une cosse perfectionnée pour collier à vis. Cette cosse permettant d'éviter l'inconvénient qui vient d'être mis en évidence tout en étant susceptible d'être fabriquée suivant les techniques avantageuses décrites par les brevets français précités.

Selon une caractéristique de l'invention il est prévu au-dessus de la fente de guidage de la bande et entre cette fente et le trou de réception, s'il existe, du tourillon de la vis, un tablier de renfort sensiblement perpendiculaire au plan du fond de la cosse. Ce tablier constitue ainsi un raidisseur augmentant substantiellement la résistance du fond de la cosse à la poussée exercée par la vis et permettant pour une poussée prédéterminée de diminuer l'épaisseur dudit fond et par conséquent celle du flan dans lequel la cosse est emboutie.

Selon une autre caractéristique de l'invention la zone centrale du fond entourant, le cas échéant, le trou de réception du tourillon de la vis est légèrement décalée vers l'intérieur de la cosse, par rapport à la zone de raccordement du fond sur l'enveloppe cylindrique. Cette disposition donne naissance à un léger pli circulaire entourant le trou de réception du tourillon et augmente à nouveau la résistance du fond à la poussée de la vis.

L'invention concerne également un procédé du genre de celui décrit dans le brevet 2 490 294 précité permettant de réaliser facilement la cosse perfectionnée. Selon l'invention au cours des opérations successives d'emboutissage destinées à la fabrication de la cosse et de préférence au cours des opérations de conformation de la cosse, on fait apparaître sur le fond de celle-ci une nervure ou languette au-dessus de la fente de passage de la bande.

L'invention sera mieux comprise et diverses autres caractéristiques apparaîtront au cours de la description qui va suivre, d'un mode de réalisation avantageux en référence aux dessins annexés dans lesquels :

-la figure 1 est une vue en coupe d'un collier à vis comportant une cosse selon l'invention;

-la figure 2 est une vue selon la flèche F du collier représenté sur la figure 1.

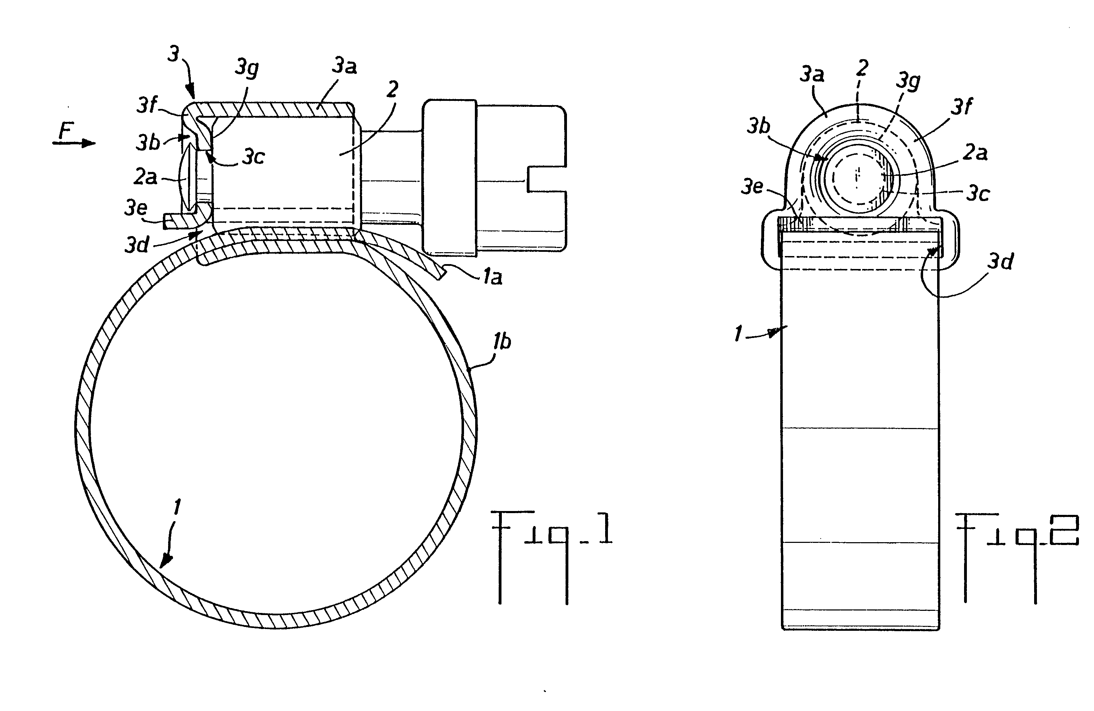

Si l'on se reporte aux dessins on voit un collier à vis fabriqué de préférence selon le procédé décrit par le brevet français 2 490 294. Il comporte une bande 1 dont le brin extérieur 1a présente des reliefs destinés à venir en prise avec les filets d'une vis 2 montée pivotante dans une cosse 3. Ainsi qu'on le sait, la cosse 3 peut ne former qu'une seule pièce avec la bande 1 et est liée au brin intérieur 1b de celle-ci.

La cosse 3 est constituée par une enveloppe sensiblement cylindrique 3a et par un fond 3b ne formant qu'une seule pièce avec elle. De préférence et comme représenté au dessin, le fond 3b présente un trou 3c recevant le tourillon 2a de la vis. Un léger écrasement de la tête 2b du tourillon assure l'immobilisation axiale de la vis dans la cosse. Une fente 3d sensiblement rectangulaire est prévue à la base du fond 3b et permet le passage du brin supérieur 1a en vue de son déplacement par la rotation de la vis.

Ainsi qu'on le voit, le bord supérieur de la fente 3d est muni d'un tablier de renfort 3e qui s'étend, vers l'extérieur de la cosse, suivant un plan sensiblement perpendiculaire à celui du fond 3b. Ce tablier augmente la rigidité du fond et par conséquent sa résistance sous la poussée de la vis 2 au cours du serrage du collier. Il permet par conséquent de diminuer l'épaisseur du métal constituant le fond pour une poussée déterminée de la vis ou, ce qui revient au même, autorise un serrage plus énergique du collier sans risquer une déformation du fond de la cosse.

De préférence la zone de fond 3 b entourant le trou 3c est légèrement décalée, vers l'intérieur de la cosse, par rapport à la zone de raccordement 3f dudit fond et de l'enveloppe 3a. Ainsi un pli 3g apparaît dans le fond autour du trou 3c ce qui augmente encore la rigidité du fond.

La fabrication de la cosse qui vient d'être décrite est facilement réalisée selon le procédé proposé par le brevet français 2 490 294. Il est toutefois nécessaire, qu'au cours des opérations de conformation de la cosse, et plus particulièrement au cours de l'opération de découpage de la fente 3d dans le fond, celle-ci ne soit découpée que sur trois côtés seulement. Ceci permet ensuite le pliage de la languette correspondante, vers l'extérieur de la cosse, le long du bord supérieur de la fente pour constituer le tablier de renfort 3e. En outre, au moment de la conformation du fond 3b on réalisera avantageusement le repoussage de la zone entourant le trou 3c vers l'intérieur de la cosse, faisant ainsi apparaître le pli 3g.

Bien évidemment il n'est pas indispensable que le tablier de renfort 3e soit replié le long du bord supérieur de la fente 3d. En particulier si le fond de la cosse ne comporte pas de trou de réception du tourillon de la vis, le tablier 3e pourra être prévu au-dessus de la fente 3d et constitué, par exemple par une nervure ou un pli s'étendant, de préférence, parallèlement à la fente. Une telle nervure sera facilement réalisée au cours des opérations d'emboutissage ou de conformation de la cosse.

**Revendications**

1. Cosse pour collier à vis constituée par une enveloppe sensiblement cylindrique (3a) et un fond (3b) formant une seule pièce avec elle, une fente - (3d) étant prévue à la base dudit fond pour permettre le passage du brin supérieur (1a) d'une bande de serrage présentant des reliefs ou analogues coopérant avec les filets de la vis (2), caractérisée en ce que le fond (3b) de la cosse présente un tablier de renfort (3e ) sensiblement perpendiculaire au plan dudit fond, ce tablier étant situé au-dessus de la fente (3d) de passage de la bande.

2. Cosse selon la revendication 1, caractérisée en ce que le tablier de renfort (3e) est constitué par une languette de métal repliée vers l'extérieur de la cosse le long du bord supérieur de la fente (3d ).

3. Cosse selon la revendication 1, caractérisée en ce que la zone centrale du fond (3b) comportant éventuellement un trou (3c) pour recevoir le tourillon (2a) de la vis, est légèrement décalée, vers l'intérieur de la cosse par rapport à la zone de raccordement (3f) dudit fond sur l'enveloppe cylindrique (3 a).

4. Procédé de fabrication d'une cosse selon l'une quelconque des revendications précédentes, à partir d'un flan de tôle, selon lequel la cosse est obtenue, de préférence avec au moins une partie de la bande constituant le collier, à la suite d'opérations successives d'emboutissage des diverses portions de la cosse, caractérisé en ce que, au cours des opérations de conformation de la cosse on fait apparaître sur le fond de celle-ci une nervure ou languette au-dessus de la fente de passage de la bande.

5. Procédé selon la revendication 4, caractérisé en ce qu'on découpe sur trois côtés seulement la fente de passage (3d) de la bande et en ce qu'on replie vers l'extérieur la languette (3e ) ainsi obtenue le long du bord supérieur de la fente (3d).

Fig.1

Fig.2

0 201 393

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,A | EP-A-0 089 438 (CAILLAU) <br> & FR - A - 2 490 294 | 1,4 | B 21 D 53/36 <br> B 21 D 35/00 <br> F 16 L 33/08 |
| | --- | | |
| D,A | FR-A-2 559 856 (CAILLAU) | 1,4 | |
| | --- | | |
| A | GB-A-1 151 238 (WITTEK MANUFACTURING COMPANY) | | |
| | --- | | |
| A | DE-A-2 506 589 (RASMUSSEN) | | |
| | --- | | |
| A | US-A-3 691 601 (HOUGH) | | |
| | --- | | |
| A | US-A-4 021 892 (PIPER) | | DOMAINES TECHNIQUES RECHERCHES (Int. Cl.4) |
| | --- | | |
| A | FR-A-2 270 507 (THOMSON INTERNATIONAL CORPORATION) | | B 21 D |
| | ----- | | |

Le présent rapport de recherche a été établi pour toutes les revendications

| Lieu de la recherche | Date d'achèvement de la recherche | Examinateur |
|---|---|---|
| LA HAYE | 18-06-1986 | PEETERS L. |